# EUROPÄISCHE PATENTANMELDUNG

(11) **EP 3 255 448 A1**
(43) Veröffentlichungstag der Anmeldung: **13.12.2017**
(21) Anmeldenummer: 17173881.8
(22) Anmeldetag: 01.06.2017
(51) Int. Cl.: G01S 5/00, G01S 5/18

(54) **VERFAHREN ZUM BESTIMMEN EINER RELATIVEN LAGE ZWISCHEN EINEM ERSTEN KRAFTFAHRZEUG UND EINEM ZWEITEN KRAFTFAHRZEUG MIT HILFE VON ULTRASCHALLSENSOREN, KRAFTFAHRZEUG SOWIE SYSTEM**

(30) Priorität: 07.06.2016 DE 102016110457
(71) Anmelder: Valeo Schalter und Sensoren GmbH, 74321 Bietigheim-Bissingen (DE)
(72) Erfinder: Bammert, Jens, 74321 Bietigheim-Bissingen (DE); Schoenung, Gabriel, 74321 Bietigheim-Bissingen (DE); Jaya, Akhil Dheerendra, 74321 Bietigheim-Bissingen (DE); Krause, Rene, 74321 Bietigheim-Bissingen (DE); Hofmann, Marcel, 74321 Bietigheim-Bissingen (DE)

(57) **Zusammenfassung**

Die Erfindung betrifft ein Verfahren zum Bestimmen einer relativen Lage zwischen einem ersten Kraftfahrzeug (1) und einem zweiten Kraftfahrzeug (1'), bei welchem mittels einer Sensoreinrichtung (2) des ersten Kraftfahrzeugs (1) ein Ultraschallsignal (9) ausgesendet wird, das Ultraschallsignal (9) von einer Sensoreinrichtung (2) des zweiten Kraftfahrzeugs (1') empfangen wird und anhand des empfangenen Ultraschallsignals (9) die relative Lage zwischen dem ersten Kraftfahrzeug (1) und dem zweiten Kraftfahrzeug (1') bestimmt wird, wobei mit der Sensoreinrichtung (2) des zweiten Kraftfahrzeugs (1') eine Empfangsrichtung des ausgesendeten Ultraschallsignals (9) bestimmt wird und die relative Lage zwischen dem ersten Kraftfahrzeug (1) und dem zweiten Kraftfahrzeug (1') anhand der Empfangsrichtung bestimmt wird.

## Beschreibung

Die vorliegende Erfindung betrifft ein Verfahren zum Bestimmen einer relativen Lage zwischen einem ersten Kraftfahrzeug und einem zweiten Kraftfahrzeug, bei welchen mittels einer Sensoreinrichtung des ersten Kraftfahrzeugs ein Ultraschallsignal ausgesendet wird, das Ultraschallsignal von einer Sensoreinrichtung eines zweiten Kraftfahrzeugs empfangen wird und anhand des empfangenen Ultraschallsignals die relative Lage zwischen dem ersten und dem zweiten Kraftfahrzeug bestimmt wird. Darüber hinaus betrifft die vorliegende Erfindung ein Kraftfahrzeug. Schließlich betrifft die vorliegende Erfindung ein System mit zumindest zwei Kraftfahrzeugen.

Das Interesse richtet sich vorliegend auf die Positionsbestimmung von Kraftfahrzeugen. Hierzu ist es aus dem Stand der Technik beispielsweise bekannt, dass die aktuelle Position eines Kraftfahrzeugs mit Hilfe eines sattelitengestützten Positionsbestimmungssystems ermittelt wird. Darüber hinaus ist es aus dem Stand der Technik bekannt, dass die aktuelle Position eines Kraftfahrzeugs in einem Mobilfunknetz bestimmt wird. Wenn das Kraftfahrzeug Teilnehmer in einem Mobilfunknetz ist oder sich ein Mobilfunkgerät in dem Kraftfahrzeug befindet, kann zur Positionsbestimmung das sogenannte TDOA-Verfahren (TDOA - Time Difference of Arrival) genutzt werden. Dieses Verfahren basiert auf einer Laufzeitmessung, bei der der Laufzeitunterschied eines Zeitstempels gemessen wird, den die Funksignale vom Mobilgerät zu verschiedenen Basisstationen des Mobilfunknetzes haben. Darüber hinaus ist es aus dem Stand der Technik bekannt, dass Kommunikationsdaten zwischen Kraftfahrzeugen über eine Fahrzeug-zu-Fahrzeug-Kommunikation (Car-to-Car Communication) übertragen werden.

Darüber hinaus ist es aus dem Stand der Technik bekannt, dass die relative Lage zwischen zwei Kraftfahrzeugen mit Hilfe von jeweiligen Sensoreinrichtungen der Kraftfahrzeuge bestimmt wird. Solche Sensoreinrichtungen können beispielsweise eine Mehrzahl von Ultraschallsensoren umfassen, welche verteilt an dem Kraftfahrzeug angeordnet sind. Hierzu beschreibt die CA 2 773 363 A1 ein Verfahren zum Bestimmen einer relativen Position eines ersten Fahrzeugs zu einem zweiten Fahrzeug, bei welchen mit einer Ultraschallquelle des ersten Fahrzeugs ein Ultraschall ausgesendet wird und mit zumindest vier Sensoren des zweiten Fahrzeugs das Ultraschallsignal empfangen wird. Anhand der zeitlichen Unterschiede, zu denen das Ultraschallsignal mit dem zumindest vier Sensoren empfangen wird, kann dann die relative Lage zwischen dem ersten Fahrzeug und dem zweiten Fahrzeuge bestimmt werden.

Darüber hinaus beschreibt die EP 0 484 895 A2 ein Verfahren zur Bestimmung einer relativen Position von Fahrzeugen im Straßenverkehr durch Aussendung von Funk- oder Ultraschall-Signalen und Messung der Laufzeit. Dabei ist es vorgesehen, dass vor der Messung zwischen den Fahrzeugen eine zyklische, an alle Fahrzeuge im Umfeld der Messung gerichtete Übertragung eines Datentelegramms erfolgt, in der das jeweils Signale aussendende Fahrzeug sowie der Zeitpunkt oder Zeitschlitz der Aussendung übermittelt werden.

Es ist Aufgabe der vorliegenden Erfindung, eine Lösung aufzuzeigen, wie die relative Lage zwischen zwei Kraftfahrzeugen mit Hilfe von Ultraschallsensoren auf einfache Weise präzise bestimmt werden kann.

Diese Aufgabe wird erfindungsgemäß durch ein Verfahren, durch ein Kraftfahrzeug sowie durch ein System mit den Merkmalen gemäß den jeweiligen unabhängigen Ansprüchen gelöst. Vorteilhafte Weiterbildungen der vorliegenden Erfindung sind Gegenstand der abhängigen Ansprüche.

Bei einer Ausführungsform eines Verfahrens zum Bestimmen einer relativen Lage zwischen einem ersten Kraftfahrzeug und einem zweiten Kraftfahrzeug, wird mittels einer Sensoreinrichtung des ersten Kraftfahrzeugs bevorzugt ein Ultraschallsignal ausgesendet. Des Weiteren wird das Ultraschallsignal insbesondere von einer Sensoreinrichtung des zweiten Kraftfahrzeugs empfangen und anhand des empfangenen Ultraschallsignals wird die relative Lage zwischen dem ersten und dem zweiten Kraftfahrzeug bestimmt. Ferner wird mit der Sensoreinrichtung des zweiten Kraftfahrzeugs bevorzugt eine Empfangsrichtung des ausgesendeten Ultraschallsignals bestimmt und die relative Lage zwischen dem ersten und dem zweiten Kraftfahrzeug wird anhand der Empfangsrichtung bestimmt.

Ein erfindungsgemäßes Verfahren dient zum Bestimmen einer relativen Lage zwischen einem ersten Kraftfahrzeug und einem zweiten Kraftfahrzeug. Dabei wird mittels einer Sensoreinrichtung des ersten Kraftfahrzeugs ein Ultraschallsignal ausgesendet. Des Weiteren wird das Ultraschallsignal von einer Sensoreinrichtung des zweiten Kraftfahrzeugs empfangen und anhand des empfangenen Ultraschallsignals wird die relative Lage zwischen dem ersten und dem zweiten Kraftfahrzeug bestimmt. Mit der Sensoreinrichtung des zweiten Kraftfahrzeugs wird eine Empfangsrichtung des ausgesendeten Ultraschallsignals bestimmt und die relative Lage zwischen dem ersten und dem zweiten Kraftfahrzeug wird anhand der Empfangsrichtung bestimmt.

Vorliegend soll die relative Lage zwischen zwei Kraftfahrzeugen bestimmt werden. Die jeweiligen Kraftfahrzeuge umfassen jeweils Sensoreinrichtungen beziehungsweise Ultraschallsensoreinrichtungen, welche eine Mehrzahl von Ultraschallsensoren umfassen können. Diese Ultraschallsensoren können beispielsweise verteilt an dem Kraftfahrzeug angeordnet sein. Beispielsweise können die Ultraschallsensoren an oder in den Stoßfängern des Kraftfahrzeugs angeordnet sein. Die relative Lage zwischen dem ersten Kraftfahrzeug und dem zweiten Kraftfahrzeug wird auf Grundlage von Ultraschallsignalen bestimmt, die mit der Sensoreinrichtung des ersten Kraftfahrzeugs ausgesendet werden. Das erste Kraftfahrzeug kann daher auch als sendendes Kraftfahrzeug bezeichnet werden. Das Ultraschallsignal, das von der Sensoreinrichtung des ersten Kraftfahrzeugs ausgesendet wurde, wird mit der Sensoreinrichtung des zweiten Kraftfahrzeugs empfangen. Das zweite Kraftfahrzeug kann daher auch als empfangendes Kraftfahrzeug bezeichnet werden. Damit das Ultraschallsignal, das von der Sensoreinrichtung des ersten Kraftfahrzeugs ausgesendet wurde, von der Sensoreinrichtung des zweiten Kraftfahrzeugs empfangen werden kann, ist es erforderlich, dass das erste Kraftfahrzeug und das zweite Kraftfahrzeug in einem vorbestimmten Mindestabstand zueinander angeordnet sind. Dieser Mindestabstand ist so zu bestimmen, dass sich das erste Kraftfahrzeug in einem Erfassungsbereich der Sensoreinrichtung des zweiten Kraftfahrzeugs befindet und/oder dass das erste Kraftfahrzeug das Ultraschallsignal in den Erfassungsbereich der Sensoreinrichtung des zweiten Kraftfahrzeugs aussendet. Der Erfassungsbereich der Sensoreinrichtung beschreibt den Bereich, in welchem mit der Sensoreinrichtung die Ultraschallsignale empfangen werden können.

Erfindungsgemäß ist es nun vorgesehen, dass mit Hilfe der Sensoreinrichtung des zweiten Kraftfahrzeugs eine Empfangsrichtung bestimmt, welche beschreibt, aus welcher Richtung das von der Sensoreinrichtung des ersten Kraftfahrzeugs ausgesendete Ultraschallsignal empfangen wurde. Anhand der Empfangsrichtung kann dann die relative Lage zwischen dem ersten und dem zweiten Kraftfahrzeug abgeschätzt werden. Anhand der Empfangsrichtung kann somit auf einfache Weise eine grobe relative Positionierung des ersten Kraftfahrzeugs zu dem zweiten Kraftfahrzeug bestimmt werden.

Beispielsweise kann bestimmt werden, ob sich das zweite Kraftfahrzeug vor, hinter, seitlich neben, schräg vor dem Kraftfahrzeug oder schräg hinter dem Kraftfahrzeug befindet. Somit kann eine grobe räumliche Zuordnung des sendenden Kraftfahrzeugs zu dem empfangenden Kraftfahrzeug ermittelt werden. Somit kann beispielsweise in Situationen, bei denen sich viele Fahrzeuge auf einer mehrspurigen Straße dicht nebeneinander befinden, die relative Lage zwischen den Kraftfahrzeugen mit Hilfe der Ultraschallsensoren der jeweiligen Sensoreinrichtungen auf einfache Weise bestimmt werden. Solche Sensoreinrichtungen mit Ultraschallsensoren sind üblicherweise in Kraftfahrzeugen verbaut, so dass keine zusätzlichen Komponenten benötigt werden. Zudem kann eine höhere Genauigkeit im Vergleich zu satellitengestützten Positionsbestimmungssystemen erreicht werden, die beispielsweise zudem den Nachteil mitbringen, dass diese in Parkhäusern nicht verwendet werden können.

Bevorzugt werden über jeweilige Kommunikationseinrichtungen des ersten und des zweiten Kraftfahrzeugs Kommunikationsdaten übertragen und die Kommunikationsdaten beschreiben eine Signalform des ausgesendeten Ultraschallsignals, wobei die Signalform des ausgesendeten Ultraschallsignals eine Pulsfolge des Ultraschallsignals und/oder eine Modulation des Ultraschallsignals beschreibt. Mit Hilfe der jeweiligen Kommunikationseinrichtungen wird also eine Fahrzeug-zu-Fahrzeug-Kommunikation (Car-to-Car Communication) bereitgestellt. Dabei werden die Kommunikationsdaten drahtlos zwischen der Kommunikationseinrichtung des ersten Kraftfahrzeugs und der Kommunikationseinrichtung des zweiten Kraftfahrzeugs übertragen. Dabei kann es vorgesehen sein, dass die Kommunikationsdaten, die zwischen dem ersten und dem zweiten Kraftfahrzeug ausgetauscht werden, eine Signalform des ausgesendeten Ultraschallsignals beschreiben. Über die Fahrzeug-zu-Fahrzeug-Kommunikation kann also vereinbart werden, welches Ultraschallsignal von dem ersten Kraftfahrzeug ausgesendet wird beziehungsweise wie dieses Ultraschallsignal aussehen wird. Somit liegt in den beiden Kraftfahrzeugen die Information vor, wie das Ultraschallsignal, das von dem ersten Kraftfahrzeug ausgesendet wird, ausgestaltet ist. Wenn die Sensoreinrichtung des zweiten Kraftfahrzeugs dieses Ultraschallsignal empfängt, ist bekannt, dass dieses von dem ersten Kraftfahrzeug stammt. Bevorzugt beschreibt die Signalform des ausgesendeten Ultraschallsignals eine Pulsfolge des Ultraschallsignals und/oder eine Modulation des Ultraschallsignals. Das Ultraschallsignal mit der vorbestimmten Signalform kann dazu verwendet werden, das erste Kraftfahrzeug, das dieses Ultraschallsignal aussendet, zu identifizieren. Zudem wird dieses Ultraschallsignal mit der vorbestimmten Signalform dazu genutzt, die relative Lage zwischen dem ersten und dem zweiten Kraftfahrzeug abzuschätzen. Die vorbestimmte Signalform des ausgesendeten Ultraschallsignals kann sich dadurch auszeichnen, dass ein Ultraschallsignal mit einer vorbestimmten Pulsfolge ausgesendet wird. Mit anderen Worten kann ein Ultraschallsignal mit einer vorbestimmten Sendesequenz ausgesendet werden. Hierzu kann der Ultraschallsensor, welcher dieses Ultraschallsignal aussendet, zu vorbestimmten Zeitpunkten aktiviert und wieder deaktiviert werden. Alternativ dazu kann zum Bereitstellen der vorbestimmten Signalform des Ultraschallsignals das Ultraschallsignal entsprechend moduliert werden. Anhand der Signalform, die über die Fahrzeug-zu-Fahrzeug-Kommunikation zuvor vereinbart wird, kann dann das ausgesendete Ultraschallsignal eindeutig dem ersten Kraftfahrzeug zugeordnet werden.

In einer weiteren Ausgestaltung beschreiben die Kommunikationsdaten, dass das Ultraschallsignal mittels der Sensoreinrichtung des ersten Kraftfahrzeugs ausgesendet wird. Mit anderen Worten können das erste und das zweite Kraftfahrzeug über die Fahrzeug-zu-Fahrzeug-Kommunikation vereinbaren, welches der Kraftfahrzeuge als sendendes Kraftfahrzeug und welches der Kraftfahrzeuge als empfangendes Kraftfahrzeug agieren soll. Ferner kann es vorgesehen sein, dass über die Fahrzeug-zu-Fahrzeug-Kommunikation vereinbart wird, wann das Ultraschallsignal mit der Sensoreinrichtung des ersten Kraftfahrzeugs ausgesendet wird. Somit kann auch in Verkehrssituationen mit mehreren Fahrzeugen, deren Sensorvorrichtungen beziehungsweise Ultraschallsensoren in Betrieb sind, eine zuverlässige Bestimmung der relativen Lage zwischen dem ersten Kraftfahrzeug und dem zweiten Kraftfahrzeug erfolgen.

In einer weiteren Ausführungsform umfasst die Sensoreinrichtung des ersten Kraftfahrzeugs eine Mehrzahl von Ultraschallsensoren und das Ultraschallsignal wird mit jedem der Mehrzahl von Ultraschallsensoren ausgesendet. Dabei kann das Ultraschallsignal gleichzeitig mit allen Ultraschallsensoren der Sensoreinrichtung des ersten Kraftfahrzeugs ausgesendet werden. Es kann auch vorgesehen sein, dass die Ultraschallsensoren der Sensoreinrichtung des ersten Kraftfahrzeugs zeitlich aufeinander folgend angesteuert werden und die jeweils das Ultraschallsignal aussenden. Das Ultraschallsignal kann mit der Sensoreinrichtung des ersten Kraftfahrzeugs grundsätzlich in eine vorbestimmte Senderichtung ausgesendet werden. Die Ultraschallsensoren können beispielsweise in den vorderen und dem hinteren Stoßfängern des ersten Kraftfahrzeugs angeordnet sein. Somit kann das Ultraschallsignal ausgehend von dem ersten Kraftfahrzeug nach vorne und/oder nach hinten ausgesendet werden. Idealerweise wird das Ultraschallsignal mit der Sensoreinrichtung des ersten Kraftfahrzeugs im Wesentlichen gleichmäßig in alle Raumrichtungen ausgesendet. Damit kann sichergestellt werden, dass die Sensoreinrichtung des zweiten Kraftfahrzeugs das Ultraschallsignal empfangen kann und die Empfangsrichtung bestimmen kann.

Bevorzugt umfasst die Sensoreinrichtung des zweiten Kraftfahrzeugs eine Mehrzahl von Ultraschallsensoren, welche verteilt an dem zweiten Kraftfahrzeug angeordnet sind und mittels der Sensoreinrichtung des zweiten Kraftfahrzeugs wird zum Bestimmen der Empfangsrichtung überprüft, mit welchen der Mehrzahl von Ultraschallsensoren das zumindest eine Ultraschallsignal empfangen wird. Mit Hilfe der Sensoreinrichtung des zweiten Kraftfahrzeugs wird nun überprüft, welche Sensoren der Sensoreinrichtung das Ultraschallsignal mit der vorbestimmten Signalform empfangen. In der Sensoreinrichtung sind zudem Informationen hinterlegt, welche die Einbauposition der jeweiligen Ultraschallsensoren beschreiben. Damit kann bestimmt werden, welche Ultraschallsensoren der Sensoreinrichtung des zweiten Kraftfahrzeugs das Ultraschallsignal empfangen haben und welche Ultraschallsensoren das Ultraschallsignal nicht empfangen haben. Aus der Information, welche Ultraschallsensoren das Ultraschallsignal empfangen haben und an welchen Einbaupositionen an dem zweiten Kraftfahrzeug diese Ultraschallsensoren angeordnet sind kann dann bestimmt werden, aus welcher Empfangsrichtung das Ultraschallsignal empfangen wird. Dies ermöglicht auf einfache Weise eine Abschätzung der relativen Lage zwischen dem ersten Kraftfahrzeug und dem zweiten Kraftfahrzeug.

In einer weiteren Ausführungsform wird anhand der Empfangsrichtung eine erste relative Lage zwischen dem ersten und dem zweiten Kraftfahrzeug mit einer ersten Positionsungenauigkeit bestimmt und anschließend wird eine zweite relative Lage zwischen dem ersten und dem zweiten Kraftfahrzeug mit einer im Vergleich zur ersten Positionsungenauigkeit geringeren, zweiten Positionsungenauigkeit bestimmt. Anhand der Empfangsrichtung des Ultraschallsignals, das von dem ersten Kraftfahrzeug ausgesendet wird und das von dem zweiten Kraftfahrzeug empfangen wird, kann eine Grobpositionierung bestimmt werden. Im Anschluss daran kann eine Feinpositionierung erfolgen, bei welcher die zweite relative Lage zwischen dem ersten und dem zweiten Kraftfahrzeug genauer bestimmt wird. Die Bestimmung der zweiten relativen Lage wird bevorzugt mit der Sensoreinrichtung des ersten Kraftfahrzeugs und der Sensoreinrichtung des zweiten Kraftfahrzeugs durchgeführt.

Bevorzugt wird zum Bestimmen der zweiten relativen Lage mit zumindest zwei Ultraschallsensoren der Sensoreinrichtung des ersten Kraftfahrzeugs jeweils ein Ultraschallsignal ausgesendet und das jeweils ausgesendete Ultraschallsignal wird mit zumindest drei Ultraschallsensoren der Sensoreinrichtung des zweiten Kraftfahrzeugs empfangen. Bevorzugt wird zu einem ersten Zeitpunkt mit einem ersten Ultraschallsensor der Sensoreinrichtung des ersten Kraftfahrzeugs das Ultraschallsignal ausgesendet. Dieses Ultraschallsignal wird dann mit drei Ultraschallsensoren der Sensoreinrichtung des zweiten Kraftfahrzeugs, die an unterschiedlichen Einbaupositionen angeordnet sind, empfangen. Zu einem zweiten Zeitpunkt wird dann mit einem zweiten Ultraschallsensor der Sensoreinrichtung des ersten Kraftfahrzeugs das Ultraschallsignal ausgesendet und wiederum mit den drei Ultraschallsensoren der Sensoreinrichtung des zweiten Kraftfahrzeugs empfangen. Anhand der jeweiligen Einbaupositionen der sendenden Ultraschallsensoren des ersten Kraftfahrzeugs und der Einbaupositionen der empfangenden Ultraschallsensoren des zweiten Kraftfahrzeugs kann dann die relative Lage bestimmt werden.

In einer weiteren Ausgestaltung werden anhand von jeweiligen Empfangszeitpunkten, an welchen die Ultraschallsignale mit den zumindest drei Ultraschallsensoren der Sensoreinrichtung des zweiten Kraftfahrzeugs empfangen werden, jeweils eine Position der zumindest zwei Ultraschallsensoren der Sensoreinrichtung des ersten Kraftfahrzeugs bestimmt und anhand der Position der zumindest zwei Ultraschallsensoren die zweite relative Lage bestimmt. Der erste Ultraschallsensor der Sensoreinrichtung des ersten Kraftfahrzeugs sendet also zunächst das Ultraschallsignal aus. Dieses Ultraschallsignal wird mit den zumindest drei Ultraschallsensoren der Sensoreinrichtung des zweiten Kraftfahrzeugs empfangen. Dabei wird dieses Ultraschallsignal zu unterschiedlichen Empfangszeitpunkten von den zumindest drei Ultraschallsensoren der Sensoreinrichtung des zweiten Kraftfahrzeugs empfangen. Die unterschiedlichen Empfangszeitpunkte ergeben sich aufgrund der unterschiedlichen Einbaupositionen der zumindest drei Ultraschallsensoren der Sensoreinrichtung des zweiten Kraftfahrzeugs. Die unterschiedlichen Empfangszeitpunkte ergeben sich also dadurch, dass die zumindest drei Ultraschallsensoren der Sensoreinrichtung des zweiten Kraftfahrzeugs unterschiedliche Abstände zu dem ersten Ultraschallsensor der Sensoreinrichtung des ersten Kraftfahrzeugs aufweisen. Anhand der zeitlichen Unterschiede der jeweiligen Empfangszeitpunkte, der bekannten Einbaupositionen der zumindest drei Ultraschallsensoren des zweiten Kraftfahrzeugs und der Ausbreitungsgeschwindigkeit des Ultraschallsignals kann dann die Position des ersten Ultraschallsensors der Sensoreinrichtung des ersten Kraftfahrzeugs bestimmt werden. Auf gleiche Weise kann die Position des zweiten Ultraschallsensors der Sensoreinrichtung des ersten Kraftfahrzeugs bestimmt werden. Hierzu kann zu einen späteren Zeitpunkt mit dem zweiten Ultraschallsensor der Sensoreinrichtung des ersten Kraftfahrzeugs ein Ultraschallsignal ausgesendet werden, welches dann wieder mit den zumindest drei Ultraschallsensoren der Sensoreinrichtung des zweiten Kraftfahrzeugs zu unterschiedlichen Empfangszeitpunkten empfangen wird. Auf Grundlage der Einbaupositionen der Ultraschallsensoren des zweiten Kraftfahrzeugs, die der Sensoreinrichtung des zweiten Kraftfahrzeugs bekannt sind, und der bestimmten Positionen der zumindest zwei Ultraschallsensoren des ersten Kraftfahrzeugs kann dann die zweite relative Lage zwischen dem ersten und dem zweiten Kraftfahrzeug bestimmt werden.

Bevorzugt sind die zumindest zwei Ultraschallsensoren, mit denen jeweils das Ultraschallsignal ausgesendet wird, symmetrisch zu einer Längsachse des ersten Kraftfahrzeugs angeordnet und die zweite relative Lage wird bezüglich der Längsachse des ersten Kraftfahrzeugs bestimmt. Wie zuvor erläutert, kann die Position der zumindest zwei Ultraschallsensoren des ersten Kraftfahrzeugs, die das Ultraschallsignal aussenden, bestimmt werden. Wenn diese zwei Ultraschallsensoren symmetrisch zu einer Längsachse des ersten Kraftfahrzeugs angeordnet sind, kann die Ausrichtung der Längsachse des ersten Kraftfahrzeugs bestimmt werden, da diese dann senkrecht zu einer gedachten Verbindungslinie zwischen den zumindest zwei Sensoren des ersten Kraftfahrzeugs verläuft. Auf diese Weise kann die Ausrichtung des ersten Kraftfahrzeugs beziehungsweise die Ausrichtung der Längsachse des ersten Kraftfahrzeugs bestimmt werden.

In einer weiteren Ausgestaltung wird die zweite relative Lage bestimmt, falls anhand der ersten relativen Lage erkannt wird, dass sich das erste Kraftfahrzeug in Fahrtrichtung vor oder hinter dem zweiten Kraftfahrzeug befindet. Die Feinpositionierung zwischen dem ersten und dem zweiten Kraftfahrzeug kann insbesondere mit Hilfe der Ultraschallsensoren bestimmt werden, falls sich das erste Kraftfahrzeug in Fahrtrichtung vor oder hinter dem zweiten Kraftfahrzeug befindet. In diesem Fall kann insbesondere garantiert werden, dass das Ultraschallsignal, das von den zumindest zwei Sensoren der Sensoreinrichtung des ersten Kraftfahrzeugs ausgesendet werden, mit drei Sensoren der Sensoreinrichtung des zweiten Kraftfahrzeugs empfangen werden können.

Ein erfindungsgemäßes Kraftfahrzeug umfasst eine Sensoreinrichtung zum Aussenden und/oder Empfangen von Ultraschallsignalen, wobei das Kraftfahrzeug dazu ausgelegt ist, ein erfindungsgemäßes Verfahren als das erste Kraftfahrzeug und/oder als das zweite Kraftfahrzeug durchzuführen. Das Kraftfahrzeug kann ferner eine Kommunikationseinrichtung zum Übertragen von Kommunikationsdaten aufweisen. Das Kraftfahrzeug ist insbesondere als Personenkraftwagen ausgebildet.

Ein erfindungsgemäßes System umfasst zumindest zwei erfindungsgemäße Kraftfahrzeuge.

Die mit Bezug auf das erfindungsgemäße Verfahren vorgestellten bevorzugten Ausführungsformen und deren Vorteile gelten entsprechend für das erfindungsgemäße Kraftfahrzeug sowie für das erfindungsgemäße System.

Weitere Merkmale der Erfindung ergeben sich aus den Ansprüchen, den Figuren und der Figurenbeschreibung. Die vorstehend in der Beschreibung genannten Merkmale und Merkmalskombinationen, sowie die nachfolgend in der Figurenbeschreibung genannten und/oder in den Figuren alleine gezeigten Merkmale und Merkmalskombinationen sind nicht nur in der jeweils angegebenen Kombination, sondern auch in anderen Kombinationen oder in Alleinstellung verwendbar, ohne den Rahmen der Erfindung zu verlassen. Es sind somit auch Ausführungen von der Erfindung als umfasst und offenbart anzusehen, die in den Figuren nicht explizit gezeigt und erläutert sind, jedoch durch separierte Merkmalskombinationen aus den erläuterten Ausführungen hervorgehen und erzeugbar sind. Es sind auch Ausführungen und Merkmalskombinationen als offenbart anzusehen, die somit nicht alle Merkmale eines ursprünglich formulierten unabhängigen Anspruchs aufweisen. Es sind darüber hinaus Ausführungen und Merkmalskombinationen, insbesondere durch die oben dargelegten Ausführungen, als offenbart anzusehen, die über die in den Rückbezügen der Ansprüche dargelegten Merkmalskombinationen hinausgehen oder abweichen.

Die Erfindung wird nun anhand von bevorzugten Ausführungsbeispielen sowie unter Bezugnahme auf die beigefügten Zeichnungen näher erläutert.

Dabei zeigen:
- Fig. 1: ein Kraftfahrzeug gemäß einer Ausführungsform der vorliegenden Erfindung, welches eine Sensoreinrichtung und eine Kommunikationseinrichtung umfasst;
- Fig. 2: ein erstes Kraftfahrzeug, in dessen Umgebung sich ein zweites Kraftfahrzeug und weitere Fahrzeuge befinden;
- Fig. 3: das erste Kraftfahrzeug, in dessen Umgebung sich das zweite Kraftfahrzeug befindet, wobei mit einer Sensoreinrichtung des ersten Kraftfahrzeugs Ultraschallsignale ausgesendet werden, die mit einer Sensoreinrichtung des zweiten Kraftfahrzeugs empfangen werden;
- Fig. 4: das erste Kraftfahrzeug und das zweite Kraftfahrzeug, welche sich auf unterschiedlichen Fahrspuren befinden;
- Fig. 5: das erste Kraftfahrzeug und das zweite Kraftfahrzeug, wobei mit einem ersten Ultraschallsensor der Sensoreinrichtung des ersten Kraftfahrzeugs ein Ultraschallsignal ausgesendet wird;
- Fig. 6: das erste Kraftfahrzeug und das zweite Kraftfahrzeug, wobei mit einem zweiten Ultraschallsensor der Sensoreinrichtung des ersten Kraftfahrzeugs ein Ultraschallsignal ausgesendet wird; und
- Fig. 7: das Ultraschallsignal, das mit dem ersten Ultraschallsensor des ersten Kraftfahrzeugs ausgesendet wird und mit drei Ultraschallsensoren der Sensoreinrichtung des zweiten Kraftfahrzeugs empfangen wird.

In den Figuren werden gleiche und funktionsgleiche Elemente mit den gleichen Bezugszeichen versehen.

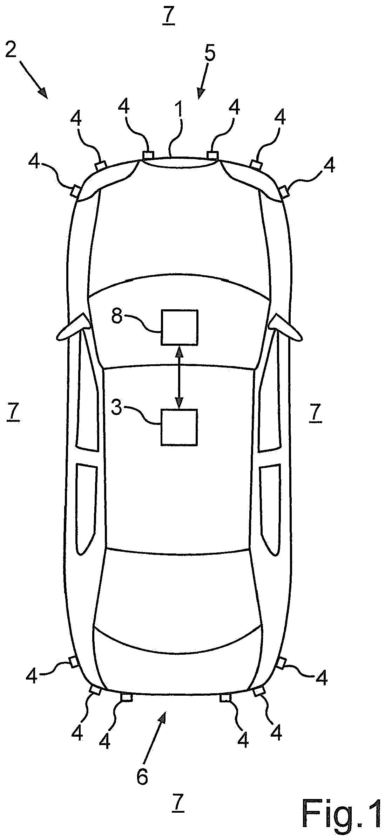

Fig. 1 zeigt ein Kraftfahrzeug 1 gemäß einer Ausführungsform der vorliegenden Erfindung in einer Draufsicht. Das Kraftfahrzeug 1 ist vorliegend als Personenkraftwagen ausgebildet. Das Kraftfahrzeug 1 umfasst eine Sensoreinrichtung 2, welche eine Mehrzahl von Ultraschallsensoren 4 umfasst. Vorliegend umfasst die Sensoreinrichtung 2 acht Ultraschallsensoren 4, wobei vier Ultraschallsensoren 4 in einem Frontbereich 5 und vier Ultraschallsensoren 4 in einem Heckbereich 6 des Kraftfahrzeugs 1 angeordnet sind.

Die Sensoreinrichtung 2 umfasst eine Steuereinrichtung 3, die beispielsweise durch ein elektronisches Steuergerät des Kraftfahrzeugs 1 bereitgestellt werden kann. Die Steuereinrichtung 3 ist mit den Ultraschallsensoren 4 zur Datenübertragung verbunden. Entsprechende Datenleitungen sind vorliegend der Übersichtlichkeit halber nicht dargestellt. Mit Hilfe der Steuereinrichtung 3 können die jeweiligen Ultraschallsensoren 4 angesteuert werden. Somit können mit den Ultraschallsensoren 4 Ultraschallsignale empfangen werden. Mit den Ultraschallsensoren 4 können ferner Sensorsignale bereitgestellt werden, welche die empfangenen Ultraschallsignale beschreiben. Diese können mit der Steuereinrichtung 3 ausgewertet werden.

Das Kraftfahrzeug 1 umfasst ferner eine Kommunikationseinrichtung 8, welche dazu dient Kommunikationsdaten mit einer Kommunikationseinrichtung 8 eines weiteren Kraftfahrzeugs auszutauschen. Die Kommunikationsdaten können beispielsweise über eine Fahrzeug-zu-Fahrzeug-Kommunikation übertragen werden.

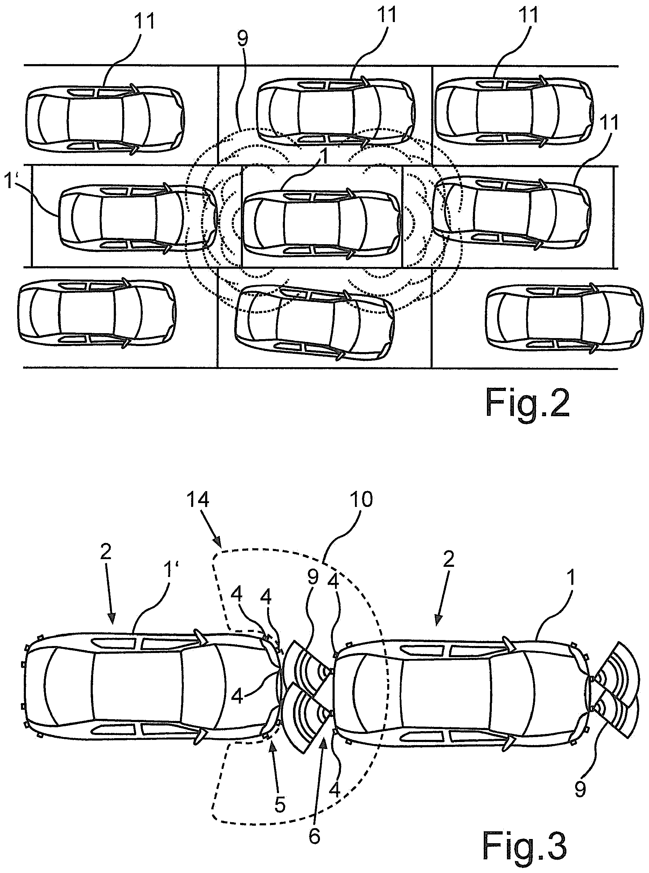

Fig. 2 zeigt das Kraftfahrzeug 1, das sich auf einer dreispurigen Fahrbahn auf einer mittleren Fahrspur befindet. Das Kraftfahrzeug 1 wird nachfolgend als erstes Kraftfahrzeug 1 bezeichnet. In Fahrtrichtung hinter dem ersten Kraftfahrzeug 1 befindet sich ein weiteres Kraftfahrzeug 1, welches nachfolgend als zweites Kraftfahrzeugs 1' bezeichnet wird. Das erste Kraftfahrzeug 1 und das zweite Kraftfahrzeug 1' sind vorliegend baugleich ausgebildet und entsprechen dem Kraftfahrzeug 1 gemäß Fig. 1. Das erste Kraftfahrzeug 1 und das zweite Kraftfahrzeug 1' bilden zusammen ein System 14. In Fahrtrichtung vor dem ersten Kraftfahrzeug 1 sowie auf den benachbarten Fahrspuren befinden sich weitere Kraftfahrzeuge 11. Mit der Sensoreinrichtung 2 des ersten Kraftfahrzeugs 1 wird nun ein Ultraschallsignal 9 ausgesendet. Dabei wird mit jedem der Ultraschallsensoren 4 der Sensoreinrichtung 2 das Ultraschallsignal ausgesendet. Die Ausbreitung des Ultraschallsignals 9 ist vorliegend beispielhaft durch die Linien dargestellt. Das erste Kraftfahrzeug 1 und das zweite Kraftfahrzeug 1' tauschen zudem Kommunikationsdaten über die Fahrzeug-zu-Fahrzeug-Kommunikation aus.

Mit Hilfe der Sensoreinrichtungen 2 des ersten Kraftfahrzeugs 1 und des zweiten Kraftfahrzeugs 1' soll zunächst grob die relative Lage zwischen dem ersten Kraftfahrzeug 1 und dem zweiten Kraftfahrzeugs 1' bestimmt werden. Dies ist anhand von Fig. 3 veranschaulicht. Hierzu werden über die Fahrzeug-zu-Fahrzeug-Kommunikation zwischen dem ersten Kraftfahrzeug 1 und dem zweiten Kraftfahrzeug 1' Kommunikationsdaten übertragen, welche eine Signalform des Ultraschallsignals 9, das mit dem ersten Kraftfahrzeug 1 ausgesendet wird, beschreiben, übertragen. Die Signalform kann beispielsweise beschreiben, mit welcher Pulsfolge das Ultraschallsignal 9 ausgesendet wird. Alternativ dazu kann die Signalform eine Modulation des Ultraschallsignals 9 beschreiben.

Vorliegend wird mit der Sensoreinrichtung 2 des ersten Kraftfahrzeugs 1 beziehungsweise mit den Ultraschallsensoren 4 des ersten Kraftfahrzeugs 1 das Ultraschallsignal 9 ausgesendet. Dieses ausgesendete Ultraschallsignal wird mit den Ultraschallsensoren 4 der Sensoreinrichtung 2 des zweiten Kraftfahrzeugs 1' empfangen. Dabei ist zudem ein Erfassungsbereich 10 der Ultraschallsensoren 4, die in dem Frontbereich 5 des zweiten Kraftfahrzeugs 1' angeordnet sind, dargestellt. Die Ultraschallsensoren 4 des ersten Kraftfahrzeugs 1 befinden sich vorliegend in dem Erfassungsbereich 10 der Ultraschallsensoren 4 des zweiten Kraftfahrzeugs 1'. Mit den Ultraschallsensoren 4 des zweiten Kraftfahrzeugs 1' kann das Ultraschallsignal 9 also empfangen werden, das mit den Ultraschallsensoren 4 ausgesendet wird, welche in dem Heckbereich 6 des ersten Kraftfahrzeugs 1 angeordnet sind. Mit Hilfe der Sensoreinrichtung 2 des zweiten Kraftfahrzeugs 1' kann nun überprüft werden, mit welchen der Ultraschallsensoren 4 der Sensoreinrichtung 2 das Ultraschallsignal 9 empfangen wurde. Vorliegend wird das ausgesendete Ultraschallsignal 9 gleichmäßig mit den Ultraschallsensoren 4 empfangen, welche im Frontbereich 5 des zweiten Kraftfahrzeugs 1' angeordnet sind. Somit kann davon ausgegangen werden, dass sich das erste Kraftfahrzeug 1 in Fahrtrichtung vor dem zweiten Kraftfahrzeug 1' befindet. Mit Hilfe der Sensoreinrichtung 2 des zweiten Kraftfahrzeugs 1' kann also die Empfangsrichtung des Ultraschallsignals 9, welches von den Ultraschallsensoren 4 des ersten Kraftfahrzeugs 1 ausgesendet wurde, bestimmt werden. Hieraus kann eine grobe relative Lage zwischen dem ersten Kraftfahrzeug 1 und dem zweiten Kraftfahrzeug 1' bestimmt werden.

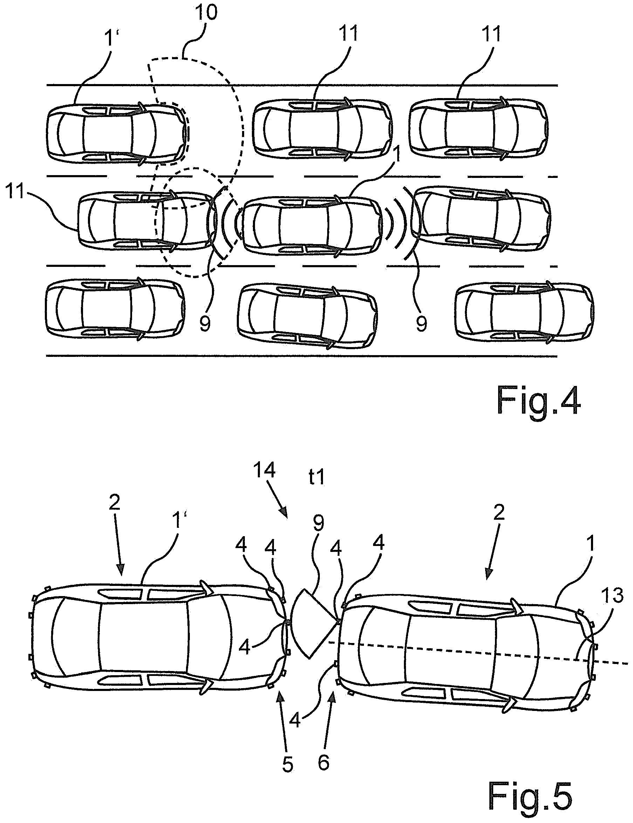

Im Vergleich hierzu zeigt Fig. 4 eine Verkehrssituation, bei der sich das zweite Kraftfahrzeug 1' schräg hinter dem Kraftfahrzeug 1 auf einer benachbarten Fahrspur befindet. In diesem Fall kann beispielsweise das ausgesendete Ultraschallsignal 9 nur mit den Ultraschallsensoren 4 des zweiten Kraftfahrzeugs 1' empfangen werden, welche im rechten vorderen Bereich des zweiten Kraftfahrzeugs 1' angeordnet sind. Auch hier kann die grobe relative Lage zwischen dem ersten Kraftfahrzeug 1 und dem zweiten Kraftfahrzeug 1' abgeschätzt werden. Bei der Verkehrssituation gemäß Fig. 4 wird das ausgesendete Ultraschallsignal 9 zudem mit einer geringeren Qualität empfangen, da das ausgesendete Ultraschallsignal 9 teilweise durch die anderen Kraftfahrzeuge 11 abgeschottet wird. Dies kann zudem bei der Bestimmung der groben relativen Lage berücksichtigt werden.

Nachdem die grobe beziehungswiese erste relative Lage zwischen dem ersten Kraftfahrzeug 1 und dem zweiten Kraftfahrzeug 1' bestimmt wurde, kann dann eine feine beziehungsweise zweite relative Lage bestimmt werden. Dabei weist die zweite relative Lage im Vergleich zur ersten relativen Lage eine geringere Positionsungenauigkeit auf. Die Bestimmung der zweiten relativen Lage zwischen dem ersten Kraftfahrzeug 1 und dem zweiten Kraftfahrzeug 1' erfolgt insbesondere, wenn sich das erste Kraftfahrzeug 1 in Fahrtrichtung vor oder hinter dem zweiten Kraftfahrzeug 1' befindet. Fig. 5 zeigt eine Verkehrssituation, bei welcher sich das erste Kraftfahrzeug 1 in Fahrtrichtung vor dem zweiten Kraftfahrzeug 1' befindet. Zur Bestimmung der zweiten relativen Lage wird mit dem ersten Ultraschallsensor 4 zu einem ersten Zeitpunkt t1 das Ultraschallsignal 9 ausgesendet. Dieses ausgesendete Ultraschallsignal 9 wird dann mit zumindest drei Ultraschallsensoren 4 des zweiten Kraftfahrzeugs 1' empfangen. Zu einem zweiten Zeitpunkt t2 wird dann mit einem zweiten Ultraschallsensor 4 des ersten Kraftfahrzeugs 1 das Ultraschallsignal 9 ausgesendet, das wiederum mit zumindest drei Ultraschallsensoren 4 der Sensoreinrichtung 2 des zweiten Kraftfahrzeugs 1'empfangen wird.

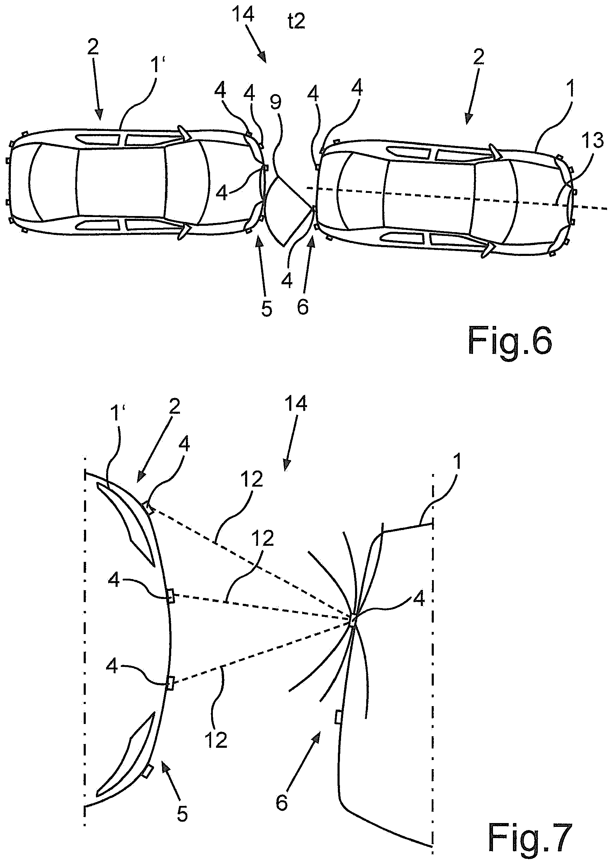

Die Ausbreitung des Ultraschallsignals 9, das mit dem ersten Ultraschallsensor 4 der Sensoreinrichtung 2 des ersten Kraftfahrzeugs 1 ausgesendet wird und das mit den drei Ultraschallsensoren 4 der Sensoreinrichtung 2 des zweiten Kraftfahrzeugs 1' empfangen wird, ist schematisch in Fig. 7 dargestellt. Dabei beschreiben die jeweiligen Linien 12 die Signalwege zwischen dem Ultraschallsensor 4 des ersten Kraftfahrzeugs 1 und den drei Ultraschallsensoren 4 des zweiten Kraftfahrzeugs 1'. Da sich die drei Ultraschallsensoren 4 der Sensoreinrichtung 2 des zweiten Kraftfahrzeugs 1' an unterschiedlichen Einbaupositionen befinden, ergeben sich unterschiedliche Signalwege und damit zeitliche Unterschiede für die Empfangszeitpunkte des Ultraschallsignals 9 für die drei Ultraschallsensoren 4. Anhand der zeitlichen Differenz der Empfangszeitpunkte und der bekannten Ausbreitungsgeschwindigkeit des ausgesendeten Ultraschallsignals kann dann die Position des Ultraschallsensors 4 des ersten Kraftfahrzeugs 1, welcher das Ultraschallsignal ausgesendet hat, bestimmt werden. Dies kann, wie in Fig. 7 dargestellt wird, für den ersten Ultraschallsensor 4 durchgeführt werden, der das Ultraschallsignal 9 zu dem Zeitpunkt t1 aussendet. In gleicher Weise kann die Position des zweiten Ultraschallsensors 4 bestimmt werden, der das Ultraschallsignal 9 zu dem zweiten Zeitpunkt t2 aussendet.

Vorliegend sind die beiden Ultraschallsensoren 4, die jeweils das Ultraschallsignal 9 aussenden, mittig zu einer Längsachse 13 des ersten Kraftfahrzeugs 1 angeordnet. Da die jeweiligen Positionen der aussendenden Ultraschallsensoren 4 bestimmt wurde, kann auch eine Orientierung der Längsachse 13 des ersten Kraftfahrzeugs 1 bestimmt werden.

Dabei wird berücksichtigt, dass die Längsachse 13 senkrecht zu einer gedachten Verbindungslinie zwischen den beiden Ultraschallsensoren 4, welche das Ultraschallsignal 9 aussenden, verläuft. Anhand der Positionen der beiden Ultraschallsensoren 4 kann somit die zweite relative Lage zwischen dem ersten Kraftfahrzeug 1 und dem zweiten Kraftfahrzeug 1' sowie die Ausrichtung des ersten Kraftfahrzeugs 1 bestimmt werden.

## Patentansprüche

1. Verfahren zum Bestimmen einer relativen Lage zwischen einem ersten Kraftfahrzeug (1) und einem zweiten Kraftfahrzeug (1'), bei welchem mittels einer Sensoreinrichtung (2) des ersten Kraftfahrzeugs (1) ein Ultraschallsignal (9) ausgesendet wird, das Ultraschallsignal (9) von einer Sensoreinrichtung (2) des zweiten Kraftfahrzeugs (1') empfangen wird und anhand des empfangenen Ultraschallsignals (9) die relative Lage zwischen dem ersten Kraftfahrzeug (1) und dem zweiten Kraftfahrzeug (1') bestimmt wird,
**dadurch gekennzeichnet, dass**
mit der Sensoreinrichtung (2) des zweiten Kraftfahrzeugs (1') eine Empfangsrichtung des ausgesendeten Ultraschallsignals (9) bestimmt wird und die relative Lage zwischen dem ersten Kraftfahrzeug (1) und dem zweiten Kraftfahrzeug (1') anhand der Empfangsrichtung bestimmt wird.

2. Verfahren nach Anspruch 1,
**dadurch gekennzeichnet, dass**
über jeweilige Kommunikationseinrichtungen (8) des ersten und des zweiten Kraftfahrzeugs (1, 1') Kommunikationsdaten übertragen werden, die Kommunikationsdaten eine Signalform des ausgesendeten Ultraschallsignals (9) beschreiben, wobei die Signalform des ausgesendeten Ultraschallsignals (9) eine Pulsfolge des Ultraschallsignals (9) und/oder eine Modulation des Ultraschallsignals (9) beschreibt.

3. Verfahren nach Anspruch 1 oder 2,
**dadurch gekennzeichnet, dass**
die Kommunikationsdaten beschreiben, dass das Ultraschallsignal (9) mittels der Sensoreinrichtung (2) des ersten Kraftfahrzeugs (1) ausgesendet wird.

4. Verfahren nach einem der vorhergehenden Ansprüche,
**dadurch gekennzeichnet, dass**
die Sensoreinrichtung (2) des ersten Kraftfahrzeugs (1) eine Mehrzahl von Ultraschallsensoren (9) umfasst und das Ultraschallsignal (9) mit jedem der Mehrzahl von Ultraschallsensoren (4) ausgesendet wird.

5. Verfahren nach einem der vorhergehenden Ansprüche,
**dadurch gekennzeichnet, dass**
die Sensoreinrichtung (2) des zweiten Kraftfahrzeugs (1') eine Mehrzahl von Ultraschallsensoren (4) umfasst, welche verteilt an dem zweiten Kraftfahrzeug (1') angeordnet sind, und mittels der Sensoreinrichtung (2) des zweiten Kraftfahrzeugs (1') zum Bestimmen Empfangsrichtung überprüft wird, mit welchen der Mehrzahl von Ultraschallsensoren (4) das Ultraschallsignal (9) empfangen wird.

6. Verfahren nach einem der vorhergehenden Ansprüche,
**dadurch gekennzeichnet, dass**
anhand der Empfangsrichtung eine erste relative Lage zwischen dem ersten und dem zweiten Kraftfahrzeug (1, 1') mit einer ersten Positionsungenauigkeit bestimmt wird und anschließend eine zweite relative Lage zwischen dem ersten und dem zweiten Kraftfahrzeug (1, 1') mit einer im Vergleich zur ersten Positionsungenauigkeit geringeren, zweiten Positionsungenauigkeit bestimmt wird.

7. Verfahren nach Anspruch 6,
**dadurch gekennzeichnet, dass**
zum Bestimmen der zweiten relativen Lage mit zumindest zwei Ultraschallsensoren (4) der Sensoreinrichtung (2) des ersten Kraftfahrzeugs (1) jeweils ein Ultraschallsignal (9) ausgesendet wird und das jeweils ausgesendete Ultraschallsignal (9) mit zumindest drei Ultraschallsensoren (4) der Sensoreinrichtung (2) des zweiten Kraftfahrzeugs (1') empfangen wird.

8. Verfahren nach Anspruch 7,
**dadurch gekennzeichnet, dass**
anhand von jeweiligen Empfangszeitpunkten, an welchen die Ultraschallsignale (9) mit den zumindest drei Ultraschallsensoren (4) der Sensoreinrichtung (2) des zweiten Kraftfahrzeugs (1') empfangen werden, jeweils eine Position der zumindest zwei Ultraschallsensoren (4) der Sensoreinrichtung (2) des ersten Kraftfahrzeugs (1) bestimmt wird und anhand der Position der zumindest zwei Ultraschallsensoren (4) die zweiten relative Lage bestimmt wird.

9. Verfahren nach einem der Ansprüche 6 bis 8,
**dadurch gekennzeichnet, dass**
die zumindest zwei Ultraschallsensoren (4), mit denen jeweils das Ultraschallsignal (9) ausgesendet wird, symmetrisch zu einer Längsachse (13) des ersten Kraftfahrzeugs (1) angeordnet sind und die zweite relative Lage bezüglich der Längsachse (13) des ersten Kraftfahrzeugs (1) bestimmt wird.

10. Verfahren nach einem der Ansprüche 6 bis 9,
**dadurch gekennzeichnet, dass**
die zweite relative Lage bestimmt wird, falls anhand der ersten relativen Lage erkannt wird, dass sich das erste Kraftfahrzeug (1) in Fahrtrichtung vor oder hinter dem zweiten Kraftfahrzeug (1') befindet.

11. Kraftfahrzeug (1, 1') mit einer Sensoreinrichtung (2) zum Aussenden und/oder Empfangen von Ultraschallsignalen (9), wobei das Kraftfahrzeug (1, 1') dazu ausgelegt ist, ein Verfahren nach einem der vorhergehenden Ansprüche als das erste Kraftfahrzeug (1) und/oder als das zweite Kraftfahrzeug (1') durchzuführen.

12. System (14) mit zumindest zwei Kraftfahrzeugen (1, 1') nach Anspruch 11.
